# EUROPÄISCHE PATENTANMELDUNG

(11) **EP 0 823 316 A1**
(43) Veröffentlichungstag der Anmeldung: **11.02.1998**
(21) Anmeldenummer: 97111141.4
(22) Anmeldetag: 03.07.1997
(51) Int. Cl.: B29C 35/08, A61C 19/00

(54) **Vorrichtung zur Aushärtung von Kunststoffen**

(30) Priorität: 07.08.1996 DE 19631785
(71) Anmelder: Heraeus Kulzer GmbH, 63450 Hanau (DE)
(72) Erfinder: Oppawsky, Steffen, 61350 Bad Homburg (DE)
(74) Vertreter: Kühn, Hans-Christian

(57) **Zusammenfassung**

Die Erfindung betrifft eine Vorrichtung zur Aushärtung von Kunststoffen mittels Strahlung mit einer Aufnahme für das zu bestrahlende Gut und einer Strahlenquelle. Um einen wirksamen Schutz zwischen Strahlenquellen und zu bestrahlendem Gut zuverlässig und auf kostengünstige Weise zu gewährleisten, ist zwischen dem zu bestrahlenden Gut und der Strahlenquelle eine Schutzscheibe aus Borosilikatglas angeordnet.

## Beschreibung

Die Erfindung betrifft eine Vorrichtung Zur Aushärtung von Kunststoffen mittels Strahlung mit einer Aufnahme für das zu bestrahlende Gut und einer Strahlenquelle.

Derartige Vorrichtungen sind im Stand der Technik vielfach bekannt. Sie sind häufig als stationäre Geräte ausgebildet, das heißt mit einem Gehäuse, in dem Strahlenquelle und Aufnahme angeordnet sind. Dabei ist die Strahlenquelle häufig aus mehreren Strahlern gebildet. Diese Strahler sind in der Regel als Entladungslampen ausgebildet, die oberhalb der Aufnahme und/oder seitlich der Aufnahme angeordnet sind. Diese Geräte werden unter anderem in zahntechnischen Labors zur Aushärtung von Dentalkunststoffen, aber auch für andere Anwendungen, wie beispielsweise zur Aushärtung der Einbettmassen von Schliffproben oder zur Aushärtung von künstlichen Fingernägeln eingesetzt.

Darüberhinaus gibt es derartige Geräte als Handgeräte beim Zahnarzt zur Aushärtung von Dentalkunststoffen direkt im Mund des Patienten.

Während des Betriebes dieser Vorrichtungen können die Strahlenquellen durch Berührung mit dem zu bestrahlenden (polymerisierenden) Gut verschmutzt werden. Außerdem besteht die Gefahr der Beschädigung des zu bestrahlenden Gutes durch Überhitzung bei zu großer Annäherung an die Strahlenquelle. Darüberhinaus kann das zu bestrahlende Gut bei Bruch der Strahlenquelle verunreinigt bzw. beschädigt werden.

Um derartige Wechselwirkungen zwischen einer Strahlenquelle und einem zu bestrahlenden Objekt zu vermeiden, ist es bekannt, Schutzscheiben aus üblichem Flachglas (Fensterglas) oder auch aus Quarzglas zu verwenden. Handelsübliches Fensterglas ist für die eingangs charakterisierte Vorrichtung jedoch nicht geeignet, da Strahlenquelle und zu bestrahlendes Gut relativ dicht aneinander angeordnet sind, so daß eine dazwischen angeordnete Schutzscheibe einer großen Wärmebelastung ausgesetzt ist. Dieser Wärmebelastung kann handelsübliches Fensterglas jedoch nicht standhalten; es würde bei der während des Betriebes entstehenden hohen Temperaturwechselbelastung durch thermomechanische Spannungen zerstört werden. Quarzglas ist zwar aufgrund seiner physikalischen Eigenschaften geeignet, es ist jedoch, als Flachglas ausgebildet, sehr teuer und aus dem Grund in der eingangs charakterisierten Vorrichtung aus wirtschaftlichen Gesichtspunkten heraus nicht einsetzbar.

Ausgehend von dem bekannten Stand der Technik liegt der Erfindung die Aufgabe zugrunde, einen wirksamen Schutz zwischen Strahlenquelle und zu bestrahlendem Gut für die eingangs charakterisierte Vorrichtung zuverlässig und auf kostengünstige Weise zu gewährleisten.

Diese Aufgabe wird erfindungsemäß dadurch gelöst, daß zwischen dem in der Aufnahme angeordneten zu bestrahlenden Gut und der Strahlenquelle eine Schutzscheibe aus Borosilikatglas angeordnet ist. Überraschenderweise hat sich gezeigt, daR eine Schutzscheibe aus Borosilikatglas einen sowohl preiswerten als auch sicheren Schutz gewährleistet. Borosilikatglas ist wesentlich kostengünstiger als Quarzglas, es ist langzeitstabil bei den während der Aushärtung von Kunststoffen in der eingangs charakterisierten Vorrichtung auftretenden Temperaturen. Es kann unproblematisch über längere Zeit einer Temperatur etwa von 450°C, kurzzeitig auch 500°C, ausgesetzt werden und weist die erforderliche Temperaturwechselbeständigkeit auf. Auch während des Betriebes ist die Borosilikatglasscheibe mechanisch so stabil, daß sie auch bei Berührung mit dem zu bestrahlenden Gut nicht zerstört werden kann. Auch einer explodierenden Strahlenquelle setzt die Borosilikatglasscheibe einen hohen mechanischen Widerstand entgegen, so daß das zu bestrahlende Gut auch in derartigen Fällen geschützt ist. Darüberhinaus entstehen an der Borosilikatglasscheibe nur sehr geringe Transmissionverluste, so daß eine hohe Energieausbeute gewährleistet ist.

Zweckmäßig ist es, daß die Strahlenquellen aus einer oder mehreren UV-Lampen, insbesondere Entladungslampen, gebildet ist, um eine gleichmäßige Strahlungsverteilung über das zu bestrahlende Gut und die für die Aushärtung benötigten Wellenlängen zur Verfügung zu stellen. Dabei ist es insbesondere zweckmäßig, daR mindestens eine UV-Lampe oberhalb der Aufnahme angeordnet ist.

Desweiteren ist es vorteilhaft, in einer Vorrichtung, in der Strahlenquelle und Aufnahme in einem Gehäuse angeordnet sind, wobei die Strahlenquelle von einem Reflektor teilweise umgeben ist, daß die Schutzscheibe auf der dem Reflektor abgewandten Seite der Strahlenquelle derart angeordnet ist, daR der zwischen Reflektor und Schutzscheibe gebildete Raum im Bereich der Kanten der Schutzscheibe mindestens teilsweise offen ist. Insbesondere kann bei Benutzung von Entladungslampen eine Begrenzung der Schutzscheibe auf die Abdeckung der Entladungsstrecke der Lampen begrenzt werden, daß die Schutzscheibe also kleinere Abmessungen aufweist als die Länge der Entladungslampen, so daß im Bereich der Anschlußenden der Entladungslampen keine Schutzscheibe angeordnet ist (das zu bestrahlende Gut ist in der Regel auch nicht in diesem Bereich angeordnet). Durch eine derartige Dimensionierung der Schutzscheibe wird nicht nur genügend Raum zwischen der Umgrenzung der Strahlenquellen, beispielsweise durch Reflektoren, und der Schutzscheibe gelassen, um ausreichende Luftzirkulation zu gewährleisten, sondern die Entladungslampen werden an ihren Anschlußenden gekühlt, während die Lampenrohre zwischen den Elektroden (auf der Entladungsstrecke) heiß bleiben. Dadurch erhöht sich die Lebensdauer bzw. die Gebrauchsdauer der Lampen erheblich.

Zweckmäßigerweise sind die Kanten der Schutzscheibe facettiert. Dadurch erhöht sich die Bruchfestigkeit bei Temperaturwechselbelastung.

Darüberhinaus hat eine Schutzscheibe aus Borosilikatglas den Vorteil, daß sie mit allen üblichen Lösungsmitteln zu reinigen ist und daß sie den kurzwelligen UV-Bereich absorbiert, so daß auch bei Verwendung von Strahlern, die auch im kurzwelligen UV-Bereich strahlen, keine teuren Interferenzschichten oder andere Filtermaßnahmen erforderlich sind.

Nachfolgend wird ein Ausführungsbeispiel der Erfindung anhand einer Zeichnung näher erläutert.

In der Zeichnung zeigt
Figur 1 die erfindungsgemäße Anordnung einer Schutzscheibe in der Seitenansicht und
Figur 2 eine Anordnung der Schutzscheibe, von oben gesehen.

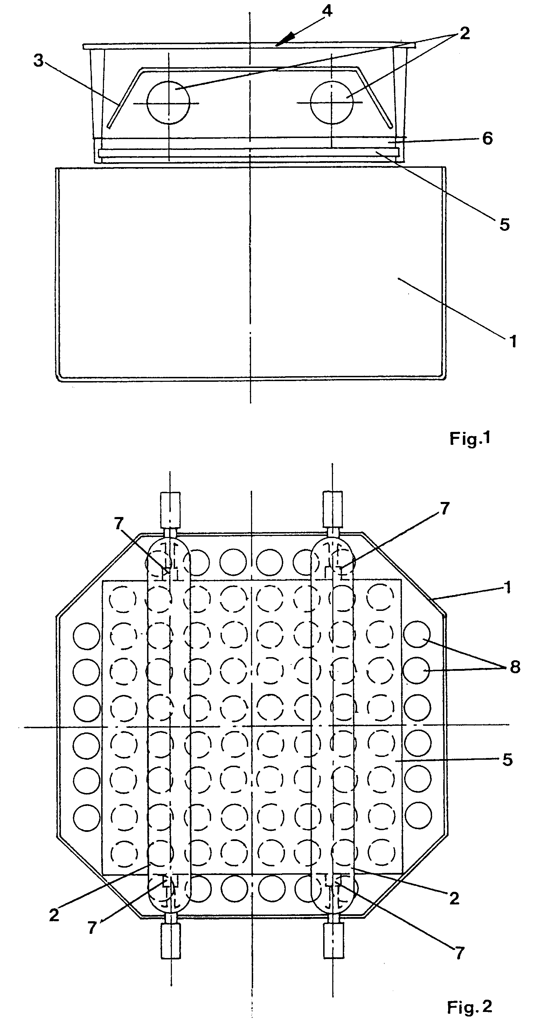

Die in den Figuren 1 und 2 gezeigte Anordnung ist üblicherweise von einem stationären Gehäuse umgeben, das eine frontseitige Öffnung zum Beladen aufweist und Bedienelemente, wie Schalter usw. Derartige Gehäuse sind dem Fachmann hinreichend bekannt. Es wird deshalb aus Gründen der Übersichtlichkeit auf die Darstellung des Gehäuses verzichtet. Oberhalb einer topfartigen Aufnahme 1 für das zu bestrahlende Gut ist die Strahlenquelle angeordnet, die zwei UV-Entladungslampen 2 aufweist. Diese beiden UV-Bestrahlungslampen 2 sind waagerecht und parallel zueinander angeordnet. Sie sind auf ihrer Oberseite und seitlich von einem Reflektor 3 umgeben. Diese Anordnung ist in einer Halterung 4 befestigt, in der auch die Schutzscheibe 5 arretiert ist. Die Schutzscheibe 5 ist unterhalb der UV-Entladungslampen 2 und oberhalb der Aufnahme 1 angeordnet. Zwischen dem Reflektor 3 und der Schutzscheibe 5 aus Borosilikatglas ist ein relativ großer Zwischenraum 6, durch den eine Wärmeabfuhr erfolgen kann.

In Figur 2 ist deutlich erkennbar, daß die Schutzscheibe 5 nicht den gesamten Bereich zwischen der Aufnahme 1 und den UV-Entladungslampen 2 abdeckt, sondern nur den Bereich zwischen den Elektroden 7, so daß die Enden der UV-Entladungslampen 2 gekühlt werden. Die Aufnahme 1 weist an ihrem Boden Löcher 8 auf, die der Wärmezirkulation dienen.

## Patentansprüche

1. Vorrichtung zur Aushärtung von Kunststoffen mittels Strahlung mit einer Aufnahme für das zu bestrahlende Gut und einer Strahlenquelle, dadurch gekennzeichnet, daß zwischen dem zu bestrahlenden Gut und der Strahlenquelle (2) eine Schutzscheibe (5) aus Borosilikatglas angeordnet ist.

2. Vorrichtung nach Anspruch 1, dadurch gekennzeichnet, daß die Strahlenquelle (2) aus einer oder mehreren UV-Lampen gebildet ist.

3. Vorrichtung nach Anspruch 1 oder 2, dadurch gekennzeichnet, daß mindestens eine UV-Lampe oberhalb der Aufnahme (1) angeordnet ist.

4. Vorrichtung nach einem der Ansprüche 1 bis 3, dadurch gekennzeichnet, daß die Kanten der Schutzscheibe (5) aus Borosilikatglas facettiert sind.

5. Vorrichtung nach einem der Ansprüche 1 bis 4, dadurch gekennzeichnet, daß Strahlenquelle (2) und Aufnahme (1) in einem Gehäuse angeordnet sind, wobei die Strahlenquelle (2) von einem Reflektor (3) teilweise umgeben ist und daß die Schutzscheibe (5) auf der dem Reflektor (3) abgewandten Seite der Strahlenquelle (2) angeordnet ist, derart, daß der zwischen Reflektor (3) und Schutzscheibe (5) gebildete Raum im Bereich der Kanten der Schutzscheibe mindestens teilweise offen ist.
